# EUROPÄISCHE PATENTSCHRIFT

(11) **EP 3 146 303 B1**
(45) Veröffentlichungstag und Bekanntmachung des Hinweises auf die Patenterteilung: **03.06.2020**
(21) Anmeldenummer: 15718198.3
(22) Anmeldetag: 20.04.2015
(51) Int. Cl.: G01L 19/06, G01L 19/14

(54) **DRUCKAUSGLEICHSELEMENT**
PRESSURE COMPENSATION ELEMENT
ÉLÉMENT DE COMPENSATION DE PRESSION

(30) Priorität: 22.05.2014 DE 102014107251
(43) Veröffentlichungstag der Anmeldung: 29.03.2017
(73) Patentinhaber: Endress+Hauser SE+Co. KG, 79689 Maulburg (DE)
(72) Erfinder: SCHONHARDT, Raphael, 79618 Rheinfelden (DE); LAIS, Michael, 79677 Wembach (DE)
(74) Vertreter: Andres, Angelika Maria
(86) Internationale Anmeldenummer: PCT/EP2015/058478
(87) Internationale Veröffentlichungsnummer: WO 2015/176890

(56) Entgegenhaltungen:
- DE-A1-102008 004 358
- DE-U1-202011 108 899
- US-A1- 2011 056 574
- US-A1- 2012 279 580

## Beschreibung

Die Erfindung betrifft einen Messaufnehmer zur messtechnischen Erfassung eines zu messenden Drucks als Relativdruck gegenüber einem in der Umgebung des Messaufnehmers herrschenden Referenzdruck, mit einem Gehäuse, einem in dem Gehäuse angeordneten Relativdrucksensor, einer Druckzufuhr, über die dem Relativdrucksensor der zu messende Druck zugeführt wird, und einer Referenzdruckzufuhr, über die dem Relativdrucksensor der Referenzdruck zugeführt wird, wobei die Referenzdruckzufuhr in einer Öffnung der Außenwand des Gehäuses mündet, auf deren Außenseite der Referenzdruck wirkt.

Feldgeräte, wie beispielsweise ein solcher Messaufnehmer, werden in der Prozess- ebenso wie in der Automatisierungstechnik vielfach eingesetzt. Die Feldgeräte dienen zur Erfassung und/oder Beeinflussung von Prozessgrössen. Zur Erfassung von Prozessgrössen dienen Messgeräte, wie beispielsweise ein Messgerät oder Messaufnehmer für Druck, das die entsprechende Prozessgrösse, Druck erfasst. Zur Beeinflussung der Prozessgrössen werden Aktoren verwendet, wie Ventile oder Pumpen, über die z. B. der Druck in einer Leitung oder einem Behälter geändert wird.

In Situationen, in denen ein Fehler bei der Erfassung einer Prozessgröße auftritt, kann es dazu kommen, dass aufgrund dieses Fehlers die Beeinflussung einer Prozessgröße auf fehlerhafterweise passiert. Zum Beispiel: führt ein Messaufnehmer eine fehlerhafte Druckerfassung durch, sodass ein Druckmesswert ermittelt wird, der einem Druck entspricht, der niedriger als einen tatsächlichen Druck in einem Behälter ist, kann es passieren, dass ein mit dem Druckmessaufnehmer und mit einer Pumpe über ein Leitsystem verbundene Steuereinheit eine Pumpe so steuert, dass der Druck in dem Behälter noch weiter erhöht wird. Solche Fehler können eventuell erheblichen Schaden anrichten.

Bei Druckmessgeräten bzw. Messaufnehmern für Druck gibt es in manchen Anwendungen Anforderungen bezüglich Reinlichkeit. Die Feldgeräte, die beispielsweise in einer Joghurtfabrik eingesetzt werden, müssen so bereinigt werden, dass hygienische Anforderungen erfüllt werden. Unter anderem bedeutet das, dass die Druckmessgeräte auf bestimmte Weise gereinigt werden. Es ist deswegen erforderlich, bei einem Relativdruckmessaufnehmer die Mündung der Referenzdruckzufuhr in der Wandung des Messgerätegehäuses gegen das Eindringen von beispielsweise Wasser während eines Reinigungsvorgangs zu schützen. Dringt Wasser oder ein anderes Material in die Referenzdruckzufuhr ein, kann es zu Fehlern in der Erfassung des Drucks führen.

Es ist bekannt, beispielsweise aus der DE 20 2011 108 899 U1 eine PTFE Membrane in die Referenzdruckzufuhr einzubauen. Dies ermöglicht den Durchlass von Luft, aber verhindert das Eindringen von Flüssigkeiten.

Ein Druckmessgerät, dessen Referenzdruckuzfuhr durch ein einschraubbares Druckausgleichselement mit einem Filterelement gegen Eindringen von Flüssigkeiten gesichert ist, wird in der Veröffentlichungsschrift US 2012/0279580 A1 beschrieben.

Ein Druckausgleichselement für Automotive-Anwendungen, dessen Lufteinlassdeckel eine Zinnenförmige Struktur und einen dahinterliegenden Membran-Filter aus PTFE aufweist, ist in der US-Veröffentlichung 2011/005674 A1 beschrieben.

Druckmessgeräte werden unter vielfältigen Bedingungen eingesetzt. Unter anderem bedeutet dies, dass die räumliche Orientierung, in der das Messgerät montiert wird, bei der Fabrikation des Messgeräts nicht im Voraus bekannt ist. Deshalb kann es vorkommen, dass eine eingebaute PTFE Membrane eine Vertiefung aufweist oder eine Tasche zusammen mit der Gehäusewandung bildet. Wenn das Messgerät oder der Messaufnehmer dann so montiert sind, dass Wasser sich in dieser Vertiefung sammeln kann, dann kann das ebenso zu einem Fehler in der Erfassung des Drucks führen.

Es ist daher die Aufgabe der Erfindung einen Messaufnehmer zur messtechnischen Erfassung eines zu messenden Drucks bereitzustellen, der so aufgebaut ist, dass Flüssigkeiten sowie andere Materialen nicht in die Referenzdruckzufuhr eindringen können, aber auch so, dass Flüssigkeit unabhängig von der räumlichen Orientierung des Messaufnehmers von der Mündung der Referenzdruckzufuhr abperlt.

Die Aufgabe wird erfindungsgemäß durch einen Messaufnehmer gemäß Anspruch 1 gelöst. Demnach ist ein Druckausgleichselement in die Mündung der Referenzdruckzufuhr eingesetzt,
wobei das Druckausgleichselement ein Befestigungselement, ein Filterelement und eine Schutzkappe aufweist,
wobei das Befestigungselement eine axiale Bohrung aufweist und dazu dient, das Druckausgleichselement in der Öffnung der Wandung zu befestigen, wobei das Filterelement an dem Befestigungselement derart angeordnet ist, dass eine Innenfläche des Filterelements zumindest die axiale Bohrung abdeckt,
wobei die das Filterelement gegen Umgebungseinflüsse schützende Schutzkappe zumindest eine umfänglichen Ausnehmung aufweist, die so angeordnet ist, dass der dem Filterelement zugewandte Bereich der zumindest einen Ausnehmung sich im Wesentlichen auf der Ebene der Außenfläche des Filterelements befindet.

Das Filterelement wird so an dem Befestigungselement angebracht, dass Wasser und/oder andere Flüssigkeiten immer abfließen können. Mit anderen Worten, das Druckausgleichselement weist keine Vertiefungen auf. Vorteilhaft kann dann das Druckausgleichselement in alle Orientierungen montiert werden. Für den Fall, dass das Druckausgleichselement an eine feste Position an einem Gehäuse angeordnet wird, kann das Gehäuse montiert werden, ohne dass die räumliche Orientierung des Druckausgleichselements beachtet werden muss.

Die zumindest eine umfängliche Ausnehmung der Schutzkappe kann beispielsweise eine ovalförmige oder kreisförmige Öffnung in einer Wandung der Schutzkappe sein.

In einer vorteilhaften Ausgestaltung handelt es sich bei dem Filterelement um ein flüssigkeitsdichtes, aber gasdurchlässiges Filterelement. Ein Beispiel hierfür ist eine aus dem Stand der Technik bekannte PTFE Membran, wie sie beispielsweise von der Firma GORE im Jahr 2014 angeboten wird. So ein Filterelement dient dazu, den Innenraum des Gehäuses bzw. der Referenzdruckzufuhr vor dem Eindringen von Flüssigkeiten zu schützen, wobei die Funktion der Referenzzufuhr, nämlich den Referenzdruck von außerhalb dem Gehäuse nach innen zu übertragen, somit nicht gestört wird.

In einer Weiterbildung ist das Filterelement ein hydrophobes oder hydrophobiertes Filterelement. Hier kann es sich beispielsweise um ein Filterelement, das aus einem Material mit hydrophoben Eigenschaften gefertigt wird, handeln. Das Filterelement kann aber auch beispielsweise ein Material sein, das chemisch oder biologisch oder in sonstiger Weise so behandelt ist, sodass zumindest die Außenfläche des Filterelements hydrophobe Eigenschaften aufweist. Weiterhin kann das Filterelement aus mehreren Materialen zusammengesetzt sein, wobei mindestens ein Material, das ein Teil der Außenfläche des Filterelements bildet, hydrophob oder hydrophobiert ist. Auch denkbar wäre eine hydrophobe Beschichtung. Somit werden Wasser und wasserbasierte Flüssigkeiten besonderes effektiv von der Außenfläche des Filterelements vertrieben. Mit anderen Worten kann Feuchtigkeit an der Außenfläche abperlen.

Eine bevorzugte Ausgestaltung sieht vor, dass das Befestigungselement und die Schutzkappe über ein Spritzgussverfahren aus Kunststoff gefertigt sind. Die Verwendung eines Spritzgussverfahrens ermöglicht einen günstigen Fertigungsprozess.

Eine bevorzugte Ausgestaltung sieht vor, dass das Befestigungselement und die Schutzkappe aus Metall gefertigt sind. Ein aus einem Metall, beispielsweise Edelstahl, gefertigtes Befestigungselement hat den besonderen Vorteil, dass es stabil und robust gegenüber schädlichen Umgebungseinflüsse ist. Bei einem Reinigungsvorgang, beispielsweise, in dem ein Hochdruckstrahlreiniger zum Einsatz kommt, ist eine metallische Struktur notwendig, um dem Hochdruck zu widerstehen. Weiterhin ist zumindest eine metallische Oberschicht der Schutzkappe und des Befestigungselements vorteilhaft, um die hygienischen Forderungen in bestimmten Anwendungen, in denen ein Relativdruckmessaufnehmer benötigt wird, zu erfüllen.

Bei einer vorteilhaften Weiterbildung ist vorgesehen, dass das Befestigungselement des Druckausgleichselements eine zinnenförmige Struktur aufweist, die an der vom Relativdrucksensor abgewandten Seite um das Filterelement herum angeordnet ist. Somit wird ein Schutz um das Filterelement herum geschaffen.

Bei einer vorteilhaften Weiterbildung ist vorgesehen, dass die Schutzkappe an dem Befestigungselement so fixiert ist, dass die zumindest eine Ausnehmung der Schutzkappe einer Zinne der zinnenförmigen Struktur gegenüber liegt. Weiterhin liegt eine Ausnehmung der zinnenförmigen Struktur einem Teilbereich der Wandung der Schutzkappe, der keine Ausnehmung aufweist, gegenüber. Hierbei wird eine maänderförmige Labyrinthstruktur gebildet, sodass kein räumlich linearer Zugang zu der Mündung der Referenzdruckzufuhr an der Öffnung zugewandtem Ende der Referenzdruckzufuhr bzw. zu dem Filterelement, das die Mündung abdeckt, von außerhalb des Gehäuses möglich ist.

Eine Ausgestaltung sieht vor, dass die Schutzkappe mit einem Rastmechanismus am Befestigungselement fixiert ist. Somit kann die Schutzkappe mit einer vorgegebenen Position und Orientierung an dem Befestigungselement angebracht werden.

Eine Ausgestaltung sieht vor, dass der Rastmechanismus so ausgestaltet ist, dass die Schutzkappe und das Befestigungselement lösbar miteinander verbunden sind. Diese Ausgestaltung ermöglicht ein schnelles Auseinander-/Zusammenbauen. Somit wird der Fertigungsprozess vereinfacht, und Ersatzteile, wie beispielsweise ein neues Filterelement, können auf einfache Weise ausgetauscht werden.

Eine Ausgestaltung sieht vor, dass die Schutzkappe mittels einer Presspassung auf dem Befestigungselement fixiert ist. Diese Ausgestaltung ist insbesondere vorteilhaft für ein aus Metall gefertigtes Druckausgleichselement.

Bei einer vorteilhaften Weiterbildung ist das Befestigungselement in die Wandung des Gehäuses eingeschraubt. Bei einer anderen Weiterbildung ist das Befestigungselement in die Wandung des Gehäuses eingesetzt und/oder eingeschweißt und/oder eingeklebt. Vorzugsweise wird ein Dichtring vorgesehen, der die Verbindung zwischen dem Befestigungselement und dem Gehäuse hermetisch abdichtet. Auf diese Weise wird der Luftaustausch über einen kontrollierten Weg, der über das Filterelement verläuft, geführt.

Die Erfindung wird anhand der nachfolgenden Figuren näher erläutert. Gleiche Elemente sind in den Figuren mit den gleichen Bezugszeichen versehen. Es zeigt:
Fig. 1: einen schematischen Querschnitt eines Messaufnehmers für Druck,
Fig. 2: einen schematischen Querschnitt einer ersten Variante eines Druckausgleichselements,
Fig. 3: einen schematischen Querschnitt einer zweiten Variante eines Druckausgleichselements,
Fig. 4: einen schematischen Querschnitt des in Fig. 3 dargestellten Druckausgleichselements entlang der in Fig. 3 gezeichneten Achse X.

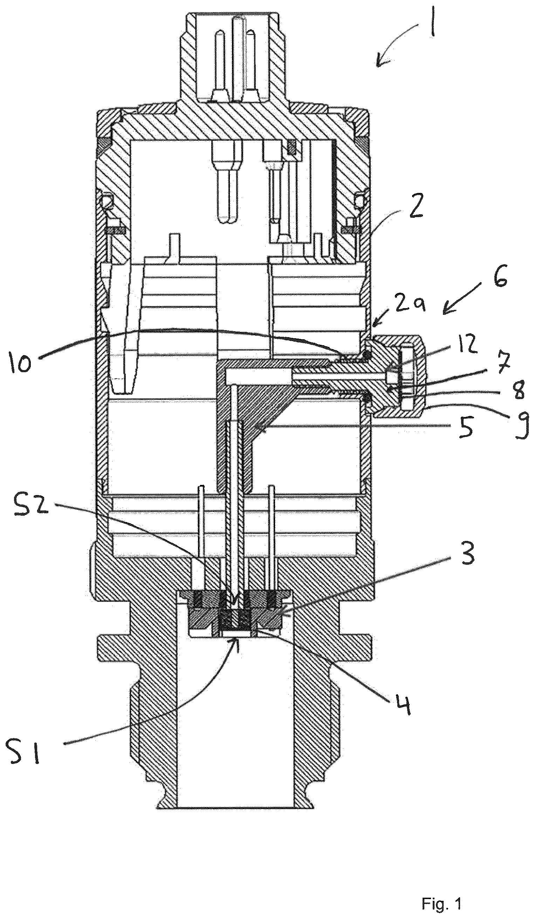

Fig. 1 zeigt einen schematischen Querschnitt eines Messaufnehmers 1 für Druck. Insbesondere ist ein Messaufnehmer 1 zur messtechnischen Erfassung eines zu messenden Drucks p als Relativdruck p_{R} gegenüber einem in der Umgebung des Messaufnehmers 1 herrschenden Referenzdruck p_{ref} gezeigt.

Bei den meisten Anwendungen ist der Referenzdruck p_{ref} der Atmosphärendruck am Einsatzort. Wird der Messaufnehmer 1 jedoch z.B. in einem unter Über- oder Unterdruck stehenden Raum eingesetzt, so ist der Referenzdruck p_{ref} zum Beispiel der Rauminnendruck.

Der Messaufnehmer 1 umfasst ein Gehäuse 2, in dem ein Relativdrucksensor 3 angeordnet ist. Der Relativdrucksensor 3 umfasst ein druckempfindliches Element 4, insb. eine Messmembran, dessen erste Seite S1 im Messbetrieb mit dem zu messenden Druck p und dessen zweite Seite S2 im Messbetrieb mit dem Referenzdruck p_{ref} beaufschlagt wird. Eine über dem druckempfindlichen Element 4 anliegende Druckdifferenz zwischen dem zu messenden Druck p und dem Referenzdruck p_{ref} bewirkt eine von dem messtechnisch zu erfassenden Relativdruck p_{R} abhängige Auslenkung des druckempfindlichen Elements 4, die mittels eines elektromechanischen Wandlers erfasst, und in ein vom zu messenden Relativdruck p_{R} abhängiges elektrisches Ausgangssignal umgewandelt wird, das dann für eine weitere Verarbeitung und/oder Auswertung zur Verfügung steht.

Hierzu eignen sich beispielsweise Halbleiter-Sensoren, wie z.B. Silizium-Chips mit einer auf einem Grundkörper G aufgebrachten druckempfindlichen Membran 4 mit darin eindotierten piezo-resistiven Widerstandselementen, die beispielsweise zu einer Mess-Brückenschaltung zusammengeschaltet sind.

Alternativ können aber auch andere Sensorarten, z.B. kapazitive keramische Relativdruckmesszellen, eingesetzt werden.

Es ist eine Druckzufuhr (nicht abgebildet) vorgesehen, über die der zu messende Druck p dem druckempfindlichen Element 4 des Relativdrucksensors 3 zugeführt wird. Die Druckzufuhr ist beispielsweise ein vorgeschalteter mit einer druckübertragenden Flüssigkeit gefüllter Druckmittler. Dieser umfasst beispielsweise eine nach außen von einer Trennmembran abgeschlossene Druckempfangskammer, die über eine Druckübertragungsleitung mit einer Messkammer verbunden ist, in der die erste Seite S1 des druckempfindlichen Elements 4 dem in der Messkammer herrschenden Druck ausgesetzt ist. Der zu messende Druck p wird der Außenseite der Trennmembran unmittelbar oder über einen Prozessanschluss zugeführt, und über die Trennmembran und die Druck übertragende Flüssigkeit in die Messkammer übertragen, wo er dann auf das druckempfindliche Element 4 des Relativdrucksensors 3 einwirkt.

Des Weiteren ist eine Referenzdruckzufuhr 5 vorgesehen, über die der zweiten Seite S2 des druckempfindlichen Elements 4 des Relativdrucksensors 3 der Referenzdruck p_{ref} zugeführt wird. Hierzu umfasst die Referenzdruckzufuhr 5 eine druck betragende Leitung, die vom Relativdrucksensor zu einer Außenwand des Gehäuses 2 führt, auf deren Außenseite der Referenzdruck p_{ref} herrscht. Die Referenzdruckzufuhr 5 mündet an einem erfindungsgemäßen Druckausgleichselement 6, die in einer aus dem Gehäuse 1 herausführenden Öffnung in der Gehäusewandung 2a befestigt ist. Die Referenzdruckzufuhr 5 ist wie in Fig. 1 gezeigt, direkt am Druckausgleichselement 6 angekoppelt. Bei der Referenzdruckzufuhr 5 kann es sich beispielsweise um einen flexiblen Schlauch handeln. Einem Fachmann ist bekannt, dass viele verschiedene Ausgestaltungen einer Referenzdruckzufuhr 5 einsetzbar sind, und dass die Erfindung nicht nur im Zusammenhang mit einer bestimmten solchen Ausgestaltung zu verstehen ist.

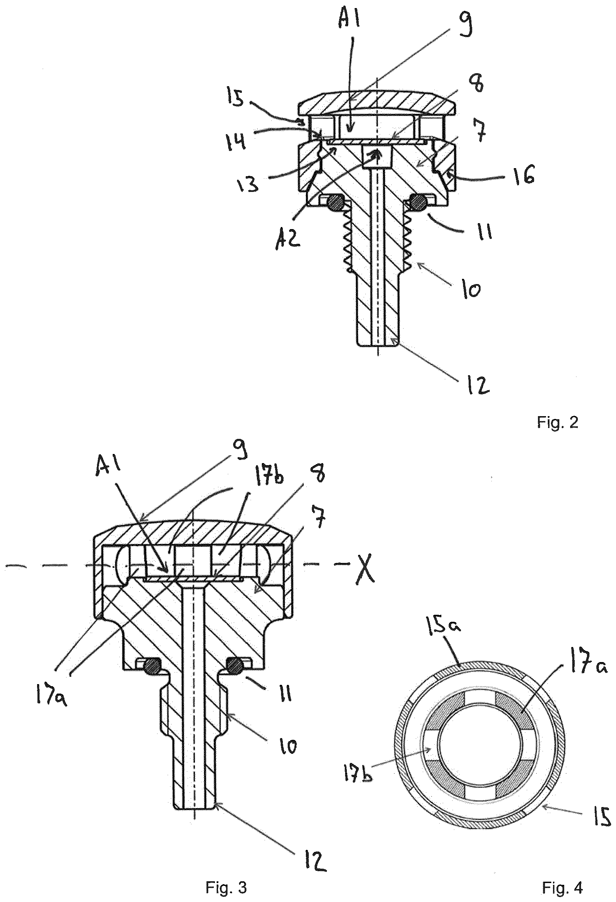

Fig. 2 zeigt einen schematischen Querschnitt einer ersten Variante eines Druckausgleichselements 6. Das Druckausgleichselement 6 weist ein Befestigungselement 7, ein Filterelement 8 und eine Schutzkappe 9 auf. Das Befestigungselement 7 wird in der Wandung 2a des Gehäuses 2 mittels des dargestellten Gewindegangs 10 befestigt. Zum Abdichten der Verbindung zwischen dem Befestigungselement 7 und der Wandung 2a des Gehäuses 2 ist ein Dichtring 11, insb. ein O-Ring 11, vorgesehen. Eine Axialbohrung 12 ist auch in Fig. 2 dargestellt. Das Filterelement 8 sitzt in einer untiefen von einen Rand 14 des Befestigungselements 7 umfangenen Ausnehmung 13 des Befestigungselements 7, sodass die Außenfläche A1 bzw. die in Fig. 2 dargestellte obere Fläche A1 des Filterelements 8 auf einer Höhe oder sogar leicht höher sitzt als der Rand 14 des Befestigungselements 7. Somit ist gesichert, dass Flüssigkeiten immer abperlen können.

Die in Fig. 2 dargestellte Schutzkappe 9 weist umfängliche Ausnehmungen 15 auf. Wenn die Schutzkappe 9 an das Befestigungselement 7 angebracht ist, liegen die in Fig. 2 dargestellten unteren Bereiche der Ausnehmungen 15 auf der Höhe oder sogar niedriger als die Außenfläche A1 des Filterelements 8.

Ein Rastmechanismus 16 ist vorhanden, der dazu dient, die Schutzkappe 9 auf dem Befestigungselement 7 so zu fixieren, dass die Schutzkappe 9 in einer bestimmten Orientierung in Bezug auf das Befestigungselement 7 fixiert ist.

Durch das Zusammenwirken von Schutzkappe 9, Filterelement 8, und Befestigungselement 7, in Verbindung mit einer aus Kunststoff gefertigten Variante des Druckausgleichselements 6, genügt der Messaufnehmer 1 insgesamt den gestellten Anforderungen der Schutzarten IP66 und/oder IP67 aus der Deutschen Industrie Norm DIN 40 050 Teil 9 aus dem Jahr 1993. Somit wird beispielsweise, sogar beim zeitweiligen Eintauchen des Messaufnehmers 1 ins Wasser, keine Wassermenge in das Gehäuse 2 eintreten, die eine schädliche Wirkung verursacht.

Fig. 3 zeigt einen schematischen Querschnitt einer zweiten Variante eines Druckausgleichselements 6. Wie in der ersten Variante sind in Fig. 3 ein Befestigungselement 7, ein Filterelement 8 und eine Schutzkappe 9 zu sehen.

Das Befestigungselement 7 des Druckausgleichselements 6 ist in einer Wandung 2a des Gehäuses 2 mittels eines Gewindegangs 10 montiert. Das Befestigungselement 7 weist einen Luftpfad 12 in Form einer Axiabohrung 12 auf, welcher dazu dient, einem in der Umgebung des Messaufnehmers 1 befindlichen Referenzdruck p_{ref} durch die Wandung 2a des Gehäuses 2 durchzuführen. Ein Filterelement 8 ist in Fig. 3 dargestellt. Es handelt sich bei dem Filterelement 8 beispielsweise um eine flüssigkeitsdichte, aber gasdurchlässige Membran, die den Luftpfad 12 besetzt. Ein O-Ring 11 zum Abdichten des Anschlusses des Befestigungselements 7 an der Gehäusewandung 2a ist vorgesehen, sowie eine Schutzkappe 9, die mittels einer Presspassung an dem Befestigungselement 7 angeordnet ist.

In Fig. 3 ist weiterhin eine zinnenförmige Struktur 17 vorgesehen, die auf der in Fig. 3 dargestellten oberen Seite A1 des Befestigungselements 7 angeordnet ist. Diese Struktur 17 ist so positioniert, dass das Filterelement 8 teilweise umkreist wird. Das Filterelement 8 sitzt, sowie in Fig. 2 auf einer Höhe oder höher als der Rand 13 des Befestigungselements. Die jetzt vorhandene zinnenförmige Struktur 17 weist Zinnen 17a und Ausnehmungen 17b auf, wobei die Ausnehmungen 17b von dem Rand 13 des Befestigungselements 7 auf eine untere Seite begrenzt werden. Auf diese Weise wird eine Art Schutz für das Filterelement 8 hergestellt, ohne dass eine Vertiefung geschaffen wird, in der sich Wasser und/oder andere Flüssigkeiten ansammeln könnten.

Fig. 4 zeigt einen schematischen Querschnitt des in Fig. 3 dargestellten Druckausgleichselements 6 entlang der in Fig. 3 gezeichnete Achse X. Hier ist eine vorteilhafte Anordnung der Schutzkappe 9 auf dem Befestigungselement 7 dargestellt. Die Ausnehmungen 15 der Schutzkappe 9 sind so positioniert, dass diese gegenüber den Zinnen 17a der zinnenförmigen Struktur 17 liegen. Somit wird eine labyrinthmäßige Struktur so gebildet, dass ein auf die Schutzkappe 9 gerichteter Wasserstrahl nicht durch zu dem Filterelement 8 gelangen kann, weil an den Stellen, an denen eine Ausnehmung 15 in der Schutzkappe 9 vorhanden ist, eine Zinne 17a platziert ist, und die Stellen 17b, an denen die zinnenförmige Struktur eine Ausnehmung 17b aufweist, sind der Wandung 15a der Schutzkappe 9 gegenüberliegend, beispielsweise in radialer Richtung. Somit ergibt sich kein direkter Zugang für strahlendes Wasser zu dem Filterelement 8 von außerhalb des Druckausgleichselements 6. Dies ist insbesondere vorteilhaft bei einem Reinigungsvorgang, in dem ein Hochdruckstrahlreiniger zum Einsatz kommt.

Durch das Zusammenwirken von Schutzkappe 9, zinnenförmiger Struktur 17 des Befestigungselements 7 und Filterelement 8 in Verbindung mit der aus Metall gefertigten Variante des Druckausgleichselements 6, genügt der Messaufnehmer 1 insgesamt den in der Schutzklasse IP69K bzw. der Deutschen Industrie Norm DIN 40050-9 aus dem Jahr 1993 gestellten Anforderungen. Er kann somit auch in Anwendungen eingesetzt werden, in denen das Gehäuse 2 Hochdruckstrahlreinigungen mit Wassermengen, z.B. von bis zu 15 Liter pro Minute, unter hohem Druck, insb. von bis zu 100 bar, gegebenenfalls auch bei hohen Temperaturen, insb. bei Temperaturen von bis zu 80°C, auf den Messaufnehmer 1 einwirken.

### Bezugszeichenliste

- 1: Messaufnehmer
- 2: Gehäuse
- 2a: Gehäusewandung
- 3: Relativdrucksensor
- 4: druckempfindlichen Element
- 5: Referenzdruckzufuhr
- 6: Druckausgleichselement
- 7: Befestigungselement
- 8: Filterelement
- 9: Schutzkappe
- 10: Gewindegang
- 11: Dichtring
- 12: axiale Bohrung
- 13: Ausnehmung des Befestigungselement
- 14: Rand des Befestigungselement
- 15: Ausnehmung der Schutzkappe
- 15a: Wandung der Schutzkappe
- 16: Rastmechanismus
- 17: zinnenformige Struktur
- 17a: Zinnen
- 17b: Ausnehmungen der zinnenförmigen Struktur
- S1: erste Seite des druckempfindlichen Elements
- S2: zweite Seite des druckempfindlichen Elements
- A1: Außenfläche des Filterelements
- A2: Innenfläche des Filterelements

## Patentansprüche

1. Messaufnehmer (1) zur messtechnischen Erfassung eines zu messenden Drucks (p) als Relativdruck (p_{R}) gegenüber einem in der Umgebung des Messaufnehmers (1) herrschenden Referenzdruck (pref), mit einem Gehäuse (2),
einem in dem Gehäuse (2) angeordneten Relativdrucksensor (3),
einer Druckzufuhr, über die dem Relativdrucksensor (3) der zu messende Druck (p) zugeführt wird, und
einer Referenzdruckzufuhr (5), über die dem Relativdrucksensor (3) der Referenzdruck (p_{ref}) zugeführt wird,
wobei die Referenzdruckzufuhr (5) in einer Öffnung der Außenwand (2a) des Gehäuses (2) mündet, auf deren Außenseite der Referenzdruck (p_{ref}) wirkt, wobei ein Druckausgleichselement (6) in die Mündung der Referenzdruckzufuhr (5) eingesetzt ist,
wobei das Druckausgleichselement (6) ein Befestigungselement (7), ein Filterelement (8) und eine Schutzkappe (9) aufweist,
wobei das Befestigungselement (7) eine axiale Bohrung (12) aufweist und dazu dient, das Druckausgleichselement (6) in der Öffnung der Wandung (2a) zu befestigen,
wobei das Filterelement (8) an dem Befestigungselement (7) derart angeordnet ist, dass eine Innenfläche (A2) des Filterelements (8) zumindest die axiale Bohrung (12) abdeckt,
wobei die das Filterelement (8) gegen Umgebungseinflüsse schützende Schutzkappe (9) zumindest eine umfänglichen Ausnehmung (15) aufweist, die so angeordnet ist, dass der dem Filterelement (8) zugewandte Bereich der zumindest einen Ausnehmung (15) sich auf der Ebene der Außenfläche (A1) des Filterelements (8) befindet oder niedriger als die Ebene der Außenfläche (A1) ist,
**dadurch gekennzeichnet, dass**
das Befestigungselement (7) des Druckausgleichselements (6) eine zinnenförmige Struktur (17) aufweist, die an der vom Relativdrucksensor (3) abgewandten Seite um das Filterelement (8) herum angeordnet ist, und dass die Schutzkappe (9) an dem Befestigungselement (7) so fixiert ist, dass die zumindest eine Ausnehmung (15) der Schutzkappe (9) einer Zinne (17a) der zinnenförmige Struktur (17) gegenüber liegt.

2. Messaufnehmer (1) nach Anspruch 1,
**dadurch gekennzeichnet, dass**
es sich bei dem Filterelement (8) um ein flüssigkeitsdichtes, aber gasdurchlässiges Filterelement (8) handelt.

3. Messaufnehmer (1) nach Anspruch 1 oder 2,
**dadurch gekennzeichnet, dass**
das Filterelement (8) ein hydrophobes oder hydrophobiertes Filterelement (8) ist.

4. Messaufnehmer (1) nach zumindest einem der Ansprüche 1 bis 3, **dadurch gekennzeichnet, dass**
das Befestigungselement (7) und die Schutzkappe (9) über ein Spritzgussverfahren aus Kunststoff gefertigt sind.

5. Messaufnehmer (1) nach zumindest einem der Ansprüche 1 bis 3, **dadurch gekennzeichnet, dass**
das Befestigungselement (7) und die Schutzkappe (9) aus Metall gefertigt sind.

6. Messaufnehmer (1) nach einem der vorhergehenden Ansprüche , **gekennzeichnet durch**
einen Rastmechanismus (16), der so ausgestaltet ist, dass die Schutzkappe (9) und das Befestigungselement (7) lösbar miteinander verbindbar sind.

7. Messaufnehmer (1) nach Anspruch 5,
**dadurch gekennzeichnet, dass**
die Schutzkappe (9) mittels einer Presspassung auf dem Befestigungselement (7) fixiert ist.

8. Messaufnehmer (1) nach zumindest einem der vorhergehenden Ansprüche, **dadurch gekennzeichnet, dass**
das Befestigungselement (7) in die Wandung (2a) des Gehäuses (2) eingeschraubt ist.

## Claims

1. Sensor (1) for the measurement of a pressure to be measured (p) as a relative pressure (p_{R}) in relation to a reference pressure (p_{ref}) present in the environment of the sensor (1), with
a housing (2),
a relative pressure sensor (3) arranged in the housing (2),
a pressure supply via which the pressure to be measured (p) is supplied to the relative pressure sensor (3),
a reference pressure supply (5) via which the reference pressure (p_{ref}) is supplied to the relative pressure sensor (3),
wherein the reference pressure supply (5) enters into an opening of the exterior wall (2a) of the housing (2), on the exterior face of which the reference pressure (p_{ref}) acts,
wherein a pressure compensation element (6) is inserted into the mouth of the reference pressure supply (5),
wherein the pressure compensation element (6) has a fixation element (7), a filter element (8) and a protection cap (9),
wherein the fixation element (7) has an axial bore (12) and is used to secure the pressure compensation element (6) in the opening of the wall (2a),
wherein the filter element (8) is arranged on the fixation element (7) in such a way that an inner surface (A2) of the filter element (8) covers at least the axial bore (12),
wherein the protection cap (9) which protects the filter element (8) against environmental influences has at least an extensive recess (15), wherein said recess is arranged in such a way that the area of the least one recess (15) facing towards the filter element (8) is on the plane of the exterior surface (A1) of the filter element (8) or is lower than the plane of the exterior surface (A1), **characterized in that**
the fixation element (7) of the pressure compensation element (6) has a crenellated structure (17), which is arranged around the filter element (8) on the side facing away from the relative pressure sensor (3), and that the protection cap (9) is fixed on the fixation element (7) in such a way that the at least one recess (15) of the protection cap (9) is situated opposite a crenel (17a) of the crenellated structure (17).

2. Sensor (1) as claimed in Claim 1,
**characterized in that**
the filter element (8) is a filter element (8) that is impermeable to liquid but is permeable to gas.

3. Sensor (1) as claimed in Claim 1 or 2,
**characterized in that**
the filter element (8) is a hydrophobic or hydrophobized filter element (8).

4. Sensor (1) as claimed in at least one of the Claims 1 to 3,
**characterized in that**
the fixation element (7) and the protection cap (9) are made from plastic via an injection molding technique.

5. Sensor (1) as claimed in at least one of the Claims 1 to 3,
**characterized in that**
the fixation element (7) and the protection cap (9) are made from metal.

6. Sensor (1) as claimed in one of the previous claims,
**characterized by**
a latching mechanism (16) which is designed in such a way that the protection cap (9) and the fixation element (7) can be interconnected in a detachable manner.

7. Sensor (1) as claimed in Claim 5,
**characterized in that**
the protection cap (9) is fixed on the fixation element (7) via a press fit.

8. Sensor (1) as claimed in at least one of the previous claims, **characterized in that**
the fixation element (7) is screwed into the wall (2a) of the housing (2).

## Revendications

1. Capteur (1) destiné à la mesure d'une pression à mesurer (p) en tant que pression relative (p_{R}) par rapport à une pression de référence (p_{ref}) régnant dans l'environnement du capteur (1), avec
un boîtier (2),
un capteur de pression relative (3) disposé dans le boîtier (2),
une alimentation en pression, à travers laquelle la pression à mesurer (p) est alimentée au capteur de pression relative (3),
une alimentation en pression de référence (5), à travers laquelle la pression de référence (p_{ref}) est alimentée au capteur de pression relative (3), l'alimentation en pression de référence (5) débouchant dans une ouverture de la paroi extérieure (2a) du boîtier (2), sur la face extérieure de laquelle la pression de référence (p_{ref}) agit,
un élément de compensation de pression (6) étant inséré dans l'ouverture de l'alimentation en pression de référence (5),
l'élément de compensation de pression (6) présentant un élément de fixation (7), un élément de filtre (8) et un capuchon de protection (9),
l'élément de fixation (7) présentant un perçage axial (12) servant à fixer l'élément de compensation de pression (6) dans l'ouverture de la paroi (2a),
l'élément de filtre (8) étant disposé dans l'élément de fixation (7) de telle sorte qu'une surface intérieure (A2) de l'élément de filtre (8) recouvre au moins le perçage axial (12),
le capuchon de protection (9) qui protège l'élément de filtre (8) contre les influences environnementales présentant au moins un évidement périphérique (15), lequel évidement est disposé de telle sorte que la zone faisant face à l'élément de filtre (8) de l'au moins un évidement (15) se trouve sur un plan de la surface extérieure (A1) de l'élément de filtre (8) ou plus bas que le plan de la surface extérieure (A1),
**caractérisé**
**en ce que** l'élément de fixation (7) de l'élément de compensation de pression (6) présente une structure crénelée (17), laquelle est disposée autour de l'élément de filtre (8), sur le côté opposé au capteur de pression relative (3), et **en ce que** le capuchon de protection (9) est fixé sur l'élément de fixation (7) de telle sorte que l'au moins un évidement (15) du capuchon de protection est situé en face d'un créneau (17a) de la structure crénelée (17).

2. Capteur (1) selon la revendication 1,
**caractérisé**
**en ce que** concernant l'élément de filtre (8), il s'agit d'un élément de filtre (8) étanche aux liquides, mais perméable aux gaz.

3. Capteur (1) selon la revendication 1 ou 2,
**caractérisé**
**en ce que** l'élément de filtre (8) est un élément de filtre (8) hydrophobe ou imperméabilisé.

4. Capteur (1) selon au moins l'une des revendications 1 à 3,
**caractérisé**
**en ce que** l'élément de fixation (7) et le capuchon de protection (9) sont fabriqués au moyen d'un procédé de moulage par injection.

5. Capteur (1) selon au moins l'une des revendications 1 à 3,
**caractérisé**
**en ce que** l'élément de fixation (7) et le capuchon de protection (9) sont fabriqués en métal.

6. Capteur (1) selon l'une des revendications précédentes,
**caractérisé**
**en ce qu'**un mécanisme d'encliquetage (16) est conçu de telle sorte qu'un capuchon de protection (9) et l'élément de fixation (7) puisse être relié entre eux de manière amovible.

7. Capteur (1) selon la revendication 5,
**caractérisé**
**en ce que** la capuchon de protection (9) est fixé au moyen d'un ajustement forcé sur l'élément de fixation (7).

8. Capteur (1) selon l'une des revendications précédentes,
**caractérisé**
**en ce que** l'élément de fixation (7) est vissé dans la paroi (2a) du boîtier (2).
